# EUROPÄISCHE PATENTANMELDUNG

(11) **EP 1 314 644 A1**
(43) Veröffentlichungstag der Anmeldung: **28.05.2003**
(21) Anmeldenummer: 02025779.6
(22) Anmeldetag: 16.11.2002
(51) Int. Cl.: B64D 45/00, G05D 1/00

(54) **Sicherungssystem zur Verhinderung von Flugzeugentführungen**

(30) Priorität: 22.11.2001 DE 10157383
(71) Anmelder: Meier, Dieter, 90763 Fürth (DE)
(72) Erfinder: Meier, Dieter, 90763 Fürth (DE)
(74) Vertreter: Matschkur, Lindner Blaumeier Patent- und Rechtsanwälte

(57) **Zusammenfassung**

Sicherungssystem zur Verhinderung der Entführung von Flugzeugen, die mit einem Autopiloten (3) mit eingespeicherter Flugroute versehen sind, wobei eine Notumschalteinrichtung (5) zur Betätigung des Autopiloten, die nach ihrer Betätigung im Cockpit (2) jedes Wiederausschalten des Autopiloten verhindert.

## Beschreibung

Die Erfindung bezieht sich auf ein Sicherungssystem zur Verhinderung der Entführung von Flugzeugen, die mit einem Autopiloten mit eingespeicherter Flugroute versehen sind.

Die Verhinderung von Flugzeugentführungen hat nach den jüngsten dramatischen Fällen, bei denen Flugzeuge nicht einfach nur an einen anderen als den ursprünglichen Zielflughafen entführt, sondern von Selbstmordattentätern als Bomben zur Zerstörung von Hochhäusern oder anderen wichtigen Industrieobjekten verwendet worden sind, eine völlig neue Bedeutung erlangt. Es geht nunmehr nicht nur darum, die Insassen eines Flugzeugs davor zu bewahren, dass sie bei Gelderpressungen als Geiseln genommen werden, wobei in vielen Fällen der Entführungen ein Anschlag auf das Leben der Flugzeuginsassen ja gar nicht beabsichtigt ist und auch nicht stattfindet, sondern es muss verhindert werden, dass mit einer solchen Entführung möglicherweise Tausende oder Zehntausende von Menschen getötet werden könnten.

Der Erfindung liegt daher die Aufgabe zugrunde, ein Sicherungssystem zur Verhinderung von Flugzeugentführungen zu schaffen, das auch durch keine Form von Drohung und Erpressung an Bord eines Flugzeugs überwindbar ist.

Zur Lösung dieser Aufgabe, ist ein solches Sicherungssystem erfindungsgemäß gekennzeichnet durch eine Notumschalteinrichtung zur Betätigung des Autopiloten, die nach ihrer Betätigung im Cockpit jedes Wiederausschalten des Autopiloten verhindert.

Die Notumschalteinrichtung, die bevorzugt den normalen Ein-Aus-Schalter des Autopiloten blockiert, kann in Ausgestaltung der Erfindung durch einen gesonderten nicht rückstellbaren Notschalter im Cockpit betätigt werden. Ist die Notumschalteinrichtung einmal betätigt worden, so besteht innerhalb des Cockpits überhaupt keine Chance mehr, diese Betätigung wieder rückgängig zu machen. Das Flugzeug fliegt dann durch den Autopiloten gesteuert seine einprogrammierte Flugroute zum Zielflughafen, wo es auch ohne Zutun des Piloten gelandet werden kann. In Fällen, in denen der Zielflughafen keine automatischen Landeeinrichtungen zum Übernehmen des mit Autopilot anfliegenden Flugzeugs besitzt, kann in weiterer Ausgestaltung der Erfindung vorgesehen sein, dass bei der Programmierung der Flugroute im Autopiloten von vorneherein eine Ausweichstrecke zu einem anderen Flughafen mit einprogrammiert ist, die bei der Betätigung des Autopiloten über die Notumschalteinrichtung automatisch ausgewählt wird und Priorität gegenüber der eigentlichen "normalen" Flugroute bekommt.

Um in Fällen einer klar nachweisbaren und nicht durch Erpressung des Personals im Flugzeug nur vorgegaukelten Fehlbetätigung der Notumschalteinrichtung kann diese über eine vom Cockpit nicht zugängliche Funkverbindung mittels spezieller Code-Schlüssel von außerhalb des Cockpits, insbesondere vom Zielflughafen her, unter Wiederausschaltung des Autopiloten betätigbar sein.

Diese Funkverbindung zur Umschalteinrichtung unter Benutzung eines komplizierten Code-Schlüssels eröffnet auch eine weitere vorteilhafte Ausgestaltung des erfindungsgemäßen Sicherungssystems. Dies ist gekennzeichnet durch ein Funkansteuergerät für die Umschalteinrichtung, das außerhalb des Cockpits von einem verdeckt arbeitenden Sicherheits-Flugbegleiter oder noch besser von einem Abfangjäger, der die notwendigen Codeinformationen vom Zielflughafen bekommen hat, betätigbar ist. Diese Betätigung aus einem Begleitflugzeug hat den Vorteil, dass auch das letztendlich nicht allzu große Risiko vermieden wird, dass ein verdeckt arbeitender Sicherheits-Flugbegleiter enttarnt wird und ihm dann die Umschalteinrichtung weggenommen werden kann.

Diese Einrichtung ermöglicht nicht nur das Wiederausschalten des Autopiloten bei einer versehentlichen Betätigung der Notumschalteinrichtung, da ja ein solcher verdeckt arbeitender Flugbegleiter sehr genau erkennen kann, ob wirklich eine Entführung stattfindet oder nicht, sondern sie ermöglicht auch die Betätigung der Umschalteinrichtung für den Autopiloten durch diesen Flugbegleiter, wenn es Flugzeugentführern gelingen sollte, die Cockpitbesatzung so rasch auszuschalten, dass sie nicht einmal mehr den Einschaltknopf für die Notumschalteinrichtung betätigen können. Gleichzeitig mit der Betätigung des Notschalters wird die Kontaktstation am Boden per Funk über den Entführungsversuch informiert.

Ein solches Sicherungssystem hat schließlich auch noch den Vorteil, dass bei seiner Einführung eine Vielzahl von Flugzeugentführungen sicherlich gar nicht mehr geplant und durchgeführt werden, da sie von vorneherein zum Scheitern verurteilt sind, nachdem die Flugzeugentführer keine Möglichkeit haben, durch eine Erpressung an Bord den einmal eingeschalteten Autopiloten wieder auszuschalten.

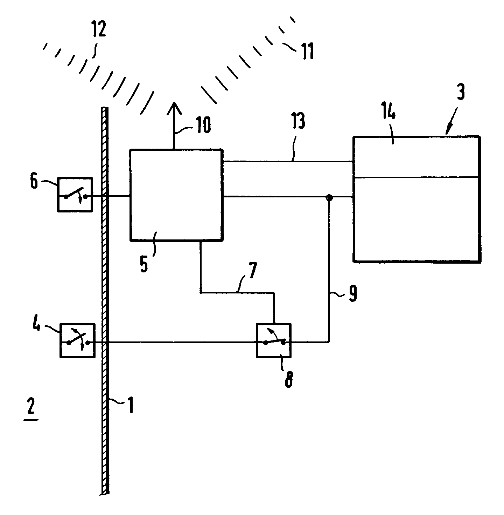

Weitere Vorteile, Merkmale und Einzelheiten der Erfindung ergeben sich aus der nachfolgenden Beschreibung eines Ausführungsbeispiels sowie anhand der Zeichnung, die schematisch ein Blockschaltbild des erfindungsgemäßen Sicherungssystems zeigt.

In der Figur bezeichnet 1 eine Trennwand, die die rechts davon gezeichneten Teile des Sicherungssystems vom links befindlichen Cockpit 2 trennt, der Raum rechts von der Trennwand 1 ist also vom Cockpit aus nicht zugänglich. Selbst eine Zerstörung der Armaturenwand würde nicht helfen, da die Einrichtungen rechts der Trennwand 1 versteckt und nicht ohne Weiteres erkennbar irgendwo im Inneren der Flugzeugsteuerung angeordnet sein können.

Der Autopilot 3 des Flugzeugs wird normalerweise über einen Ein-Aus-Schalter 4 vom Piloten im Cockpit betätigt, wobei der Autopilot durch den umschaltbaren Ein-Aus-Schalter 4 beliebig ein-, aus- und wieder eingeschaltet werden kann. Erfindungsgemäß ist eine Notumschalteinrichtung 5 vorgesehen, die über einen Notschalter 6 nur ein-, aber nicht mehr ausgeschaltet werden kann, wobei diese Notumschalteinrichtung nicht nur den Autopilot 3 einschaltet, sondern gleichzeitig über eine Steuerleitung 7 einen Unterbrechungsschalter 8 im Ansteuerstromkreis 9 des Ein-Aus-Schalters 4 zum Autopiloten 3 öffnet. Wenn die Notumschalteinrichtung 5 betätigt worden ist und zusätzlich zur Einschaltung des Autopiloten 3 auch den Unterbrechungsschalter 8 betätigt hat, ist der Ein-Aus-Schalter 4 für den Autopiloten völlig wirkungslos. Die Notumschalteinrichtung kann nur noch über eine Funkverbindung, angedeutet durch die Antenne 10, entweder mittels eines Funksignals 11 vom Zielflughafen aus oder mittels eines Funksignals 12 vom Funkansteuergerät eines verdeckt arbeitenden Sicherheits-Flugbegleiters im Passagierraum des Flugzeugs oder vom Funkansteuergerät aus einem Begleitflugzeug, das die Code-Informationen vom Zielflughafen erhalten hat, betätigt werden, um den Autopiloten wieder auszuschalten.

Bei 13 ist eine Steuerleitung zu erkennen, die von der Notumschalteinrichtung zum Flugroutenspeicher 14 des Autopiloten führt. In diesem Flugroutenspeicher sind neben der "normalen" Flugroute auch noch eine oder mehrere Ausweichflugrouten für den jeweiligen Flug enthalten, insbesondere dahingehend, dass bei einem Flug, der zu einem Flughafen ohne automatisches Landesystem führt, die Betätigung der Notumschalteinrichtung 5 automatisch auf eine geänderte Flugroute umschaltet, damit mithilfe des ja dann nicht mehr ausschaltbaren Autopiloten ein Flughafen angesteuert wird, auf dem das Flugzeug auch ohne Zutun der Piloten automatisch gelandet werden kann. Dabei kann natürlich die Ausgestaltung so getroffen sein, dass, je nachdem wie weit der Flug schon gedien ist, unterschiedliche Ausweichflugrouten gewählt werden, wobei bevorzugt eine Flugroute ausgewählt wird, die möglichst rasch zur Landung des Flugzeugs führt.

Bei großen Abweichungen des Flugzeugs von der vorgeschriebenen Route kann der Umschalter auch von der Kontrolle am Boden betätigt werden.

## Patentansprüche

1. Sicherungssystem zur Verhinderung der Entführung von Flugzeugen, die mit einem Autopiloten mit eingespeicherter Flugroute versehen sind, **gekennzeichnet durch** eine Notumschalteinrichtung (5) zur Betätigung des Autopiloten (3), die nach ihrer Betätigung im Cockpit (2) jedes Wiederausschalten des Autopiloten (3) verhindert.

2. Sicherheitssystem nach Anspruch 1, **dadurch gekennzeichnet, dass** der Notumschalteinrichtung (5) ein gesonderter nicht rückstellbarer Notschalter (6) im Cockpit (2) zugeordnet ist.

3. Sicherheitssystem nach Anspruch 1 oder 2, **dadurch gekennzeichnet, dass** die Notumschalteinrichtung (5) den normalen Ein-Aus-Schalter (4) für den Autopiloten blockiert.

4. Sicherheitssystem nach einem der Ansprüche 1 bis 3, **dadurch gekennzeichnet, dass** die Notumschalteinrichtung (5) über eine vom Cockpit (2) nicht zugängliche Funkverbindung (10) mittels spezieller Code-Schlüssel von außerhalb des Cockpits, insbesondere vom Zielflughafen her, unter Wiederausschaltung des Autopiloten (3) betätigbar ist.

5. Sicherheitssystem nach Anspruch 4, **gekennzeichnet durch** ein Funkansteuergerät für die Notumschalteinrichtung (5) ,das außerhalb des Cockpits von einem verdeckt arbeitenden Sicherheits-Flugbegleiter, oder aus einem Begleitflugzeug (Abfangjäger), betätigbar ist.

6. Sicherheitssystem nach einem der Ansprüche 1 bis 5, **dadurch gekennzeichnet, dass** im Autopiloten (3) wenigstens eine Flugroute zu einem mit automatischen Landesystemen versehenen Ausweichflughafen programmiert ist, auf die bei Betätigung der Notumschalteinrichtung (5) automatisch umgeschaltet wird.

7. Sicherheitssystem nach einem der Ansprüche 1 bis 6, **dadurch gekennzeichnet, dass** bei Betätigung der Notumschalteinrichtung der Zielflughafen und/oder die nächste Bodenstation automatisch informiert wird.
